# EUROPEAN PATENT APPLICATION

(11) **EP 2 696 056 A2**
(43) Date of publication of application: **12.02.2014**
(21) Application number: 13179652.6
(22) Date of filing: 07.08.2013
(51) Int. Cl.: F02C 7/14

(54) **Gas turbine engine heat exchangers and methods of assembling the same**

(30) Priority: 07.08.2012 US 201261680323 P; 07.06.2013 US 201313912897
(71) Applicant: Unison Industries LLC, Jacksonville, FL 32256 (US)
(72) Inventor: Storage, Michael Ralph, Dayton, OH 45434 (US); McQueen, Dennis Alan, Dayton, OH 45434 (US); Foster, Roger Earl, Dayton, OH 45434 (US)
(74) Representative: Williams, Andrew Richard

(57) **Abstract**

A heat exchanger assembly (130) for use in a gas turbine engine includes a bypass valve (136) and at least one body portion (202). The body portion includes at least one de-congealing inlet channel (248) in flow communication with the bypass valve, a plurality of cooling channels (232) in flow communication with the bypass valve and the at least one de-congealing inlet channel, and at least one de-congealing outlet channel (250) in flow communication with the bypass valve and the at least one de-congealing inlet channel. The bypass valve is configured to deliver a fluid between the at least one de-congealing inlet channel and the plurality of cooling channels during a first mode of operation to facilitate reducing a temperature of the fluid. The bypass valve is further configured to deliver the fluid between the at least one de-congealing inlet channel and the at least one de-congealing outlet channel during a second mode of operation.

## Description

### CROSS-REFERENCE TO RELATED APPLICATIONS

This application is a non-provisional application and claims priority to U.S. Provisional Patent Application Serial No. 61/680,323 filed August 7, 2012 for "METHODS AND ASSEMBLY FOR OPERATING GAS TURBINE HEAT EXCHANGERS", which is hereby incorporated by reference in its entirety.

### BACKGROUND OF THE INVENTION

The application described herein relates generally to gas turbine engines, and more specifically to methods and apparatus for operating gas turbine engines.

Gas turbine engines typically include an inlet, a fan, low and high pressure compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as producing useful work to propel an aircraft in flight or to power a load, such as an electrical generator.

During engine operation, significant heat is produced which raises the temperature of engine systems to unacceptable levels. A lubrication system is utilized to facilitate lubricating components within the gas turbine engine. The lubrication system is configured to channel lubrication fluid to various bearing assemblies within the gas turbine engine. During operation, heat is transmitted to the lubrication fluid from heat generated by sliding and rolling friction by components like bearings and seals within the engine. To facilitate reducing the operational temperature of the lubrication fluid, at least one known gas turbine engine utilizes a conventional heat exchanger that is disposed in the air stream channeled through the engine allowing air that passes through it to cool the fluid circulating within.

However, when the engine is non-operational or is operating in circumstances where the engine is subject to subzero temperatures, cooling of the lubricating fluid is not required, and a bypass valve is engaged to prevent lubricating fluid from flowing through the heat exchanger. Because the hot fluid is not flowing through the exchanger, the exchanger decreases in temperature such that any fluid remaining within increases in viscosity and begins to congeal. Furthermore, when the bypass valve is disengaged to allow flow of lubricating fluid through the exchanger, the low temperature of the exchanger causes the flow of fluid to congeal before the fluid can warm the exchanger to allow the fluid to flow.

Accordingly, there exists a need for a heat exchanger that prevents the congealing of fluid when the engine is subjected to subzero temperatures.

### BRIEF DESCRIPTION OF THE INVENTION

In one aspect, a heat exchanger assembly for use in a gas turbine engine is provided. The heat exchanger assembly includes a bypass valve and at least one body portion. The body portion includes at least one de-congealing inlet channel in flow communication with the bypass valve, a plurality of cooling channels in flow communication with the bypass valve and the at least one de-congealing inlet channel, and at least one de-congealing outlet channel in flow communication with the bypass valve and the at least one de-congealing inlet channel. The bypass valve is configured to deliver a fluid between the at least one de-congealing inlet channel and the plurality of cooling channels during a first mode of operation to facilitate reducing a temperature of the fluid. The bypass valve is further configured to deliver the fluid between the at least one de-congealing inlet channel and the at least one de-congealing outlet channel during a second mode of operation.

In another aspect, a method of assembling a gas turbine engine having an axis of rotation is provided. The method comprises providing a fan casing that substantially circumscribes the gas turbine engine and providing a heat exchanger assembly. The heat exchanger assembly includes a bypass valve and at least one body portion. The body portion includes at least one de-congealing inlet channel in flow communication with the bypass valve, a plurality of cooling channels in flow communication with the bypass valve and the at least one de-congealing inlet channel, and at least one de-congealing outlet channel in flow communication with the bypass valve and the at least one de-congealing inlet channel. The bypass valve is configured to deliver a fluid between the at least one de-congealing inlet channel and the plurality of cooling channels during a first mode of operation to facilitate reducing a temperature of the fluid. The bypass valve is further configured to deliver the fluid between the at least one de-congealing inlet channel and the at least one de-congealing outlet channel during a second mode of operation. The method further comprises coupling the heat exchanger assembly to the fan casing.

In yet another aspect, a gas turbine engine assembly is provided. The gas turbine engine assembly comprises a core gas turbine engine having an axis of rotation, a fan casing substantially circumscribing the core gas turbine engine, and a heat exchanger assembly positioned within the fan casing. The heat exchanger assembly includes a bypass valve and at least one body portion. The body portion includes at least one de-congealing inlet channel in flow communication with the bypass valve, a plurality of cooling channels in flow communication with the bypass valve and the at least one de-congealing inlet channel, and at least one de-congealing outlet channel in flow communication with the bypass valve and the at least one de-congealing inlet channel. The bypass valve is configured to deliver a fluid between the at least one de-congealing inlet channel and the plurality of cooling channels during a first mode of operation to facilitate reducing a temperature of the fluid. The bypass valve is further configured to deliver the fluid between the at least one de-congealing inlet channel and the at least one de-congealing outlet channel during a second mode of operation.

### BRIEF DESCRIPTION OF THE DRAWINGS

Figure 1 is a schematic illustration of an exemplary gas turbine engine.

Figure 2 is a schematic illustration of an exemplary lubrication system that may be utilized with the gas turbine engine shown in Figure 1.

Figure. 3 is a perspective view of an exemplary arcuate heat exchanger assembly that may be utilized with the gas turbine engine shown in Figure 1.

Figure 4 is a perspective cross-sectional view of the heat exchanger assembly shown in Figure 3 taken through line 4 - 4.

Figure 5 is a schematic illustration of a first mode of operation through the heat exchanger assembly shown in Figure 3.

Figure 6 is a schematic illustration of a second mode of operation through the heat exchanger assembly shown in Figure 3.

Figure 7 is a perspective cross-sectional view of another embodiment of a heat exchanger assembly that may be utilized with the gas turbine engine shown in Figure 1.

Figure 8 is a perspective cross-sectional view of yet another embodiment of a heat exchanger assembly that may be utilized with the gas turbine engine shown in Figure 1.

Figure 9 is a perspective cross-sectional view of a further embodiment of a heat exchanger assembly that may be utilized with the gas turbine engine shown in Figure 1.

Figure 10 is a perspective cross-sectional view of yet another embodiment of a heat exchanger assembly that may be utilized with the gas turbine engine shown in Figure 1.

### DETAILED DESCRIPTION OF THE INVENTION

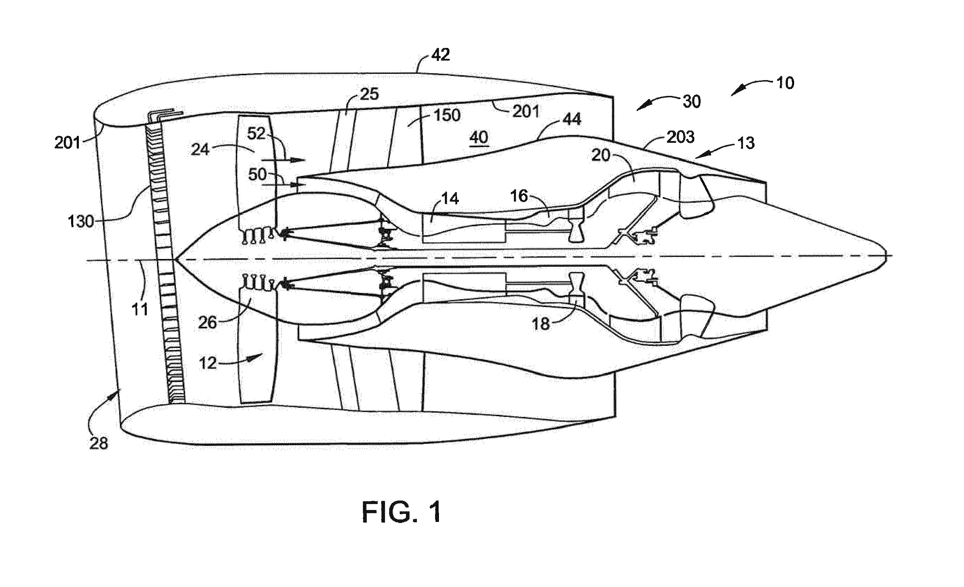

Figure 1 is a schematic illustration of an exemplary gas turbine engine assembly 10 having a longitudinal axis 11. Gas turbine engine assembly 10 includes a fan assembly 12, and a core gas turbine engine 13. Core gas turbine engine includes a high pressure compressor 14, a combustor 16, and a high pressure turbine 18. In the exemplary embodiment, gas turbine engine assembly 10 may also include a low pressure turbine 20. Fan assembly 12 includes an array of fan blades 24 extending radially outward from a rotor disk 26. Engine 10 has an intake side 28 and an exhaust side 30. Gas turbine engine assembly 10 also includes a plurality of bearing assemblies (not shown in Figure 1) that are utilized to provide rotational and axial support to fan assembly 12, compressor 14, high pressure turbine 18 and low pressure turbine 20, for example.

In operation, air flows through fan assembly 12 and is split by an airflow splitter 44 into a first portion 50 and a second portion 52. First portion 50 of the airflow is channeled through compressor 14 wherein the airflow is further compressed and delivered to combustor 16. Hot products of combustion (not shown in Figure 1) from combustor 16 are utilized to drive turbines 18 and 20 and thus produce engine thrust. Gas turbine engine assembly 10 also includes a bypass duct 40 that is utilized to bypass a second portion 52 of the airflow discharged from fan assembly 12 around core gas turbine engine 13. More specifically, bypass duct 40 extends between an inner wall 201 of a fan casing or shroud 42 and an outer wall 203 of splitter 44.

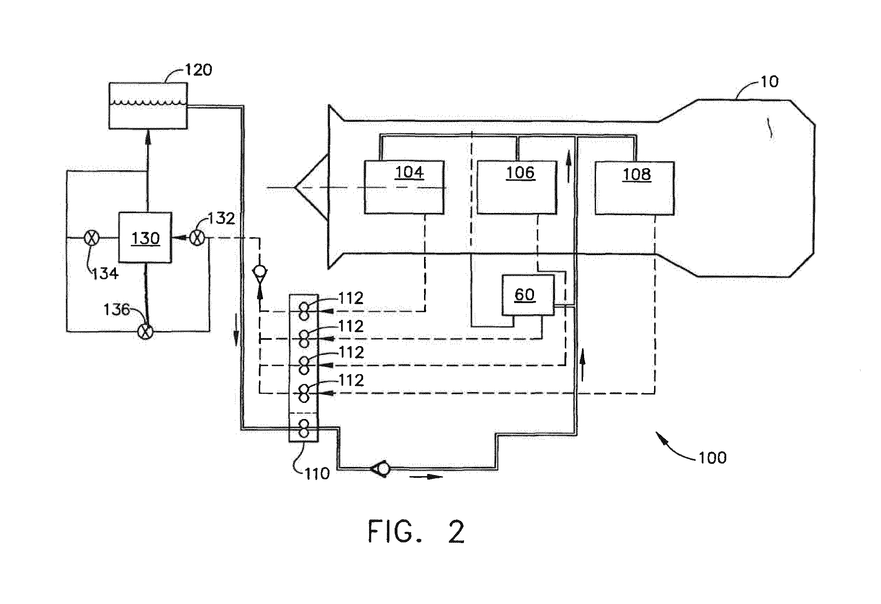

Figure 2 is a simplified schematic illustration of an exemplary lubrication fluid supply and recovery system 100 that may be utilized with a gas turbine engine assembly 10. In the exemplary embodiment, system 100 includes a fluid supply source 120 and one or more pumps 110 and 112 which circulate the fluid to bearings 104, 106, 108 and to the gearbox 60 and return the hot fluid to the fluid supply source via a heat exchanger assembly 130 which cools it to a lower temperature. In the exemplary embodiment, heat exchanger assembly 130 may include an inlet port 132, and outlet port 134, and a bypass valve 136 that may be either pressure controlled, thermally, controlled, or electrically operated. Bypass valve 136 is employed to direct the flow of lubricating fluid through heat exchanger assembly according to either a first or second mode of operation.

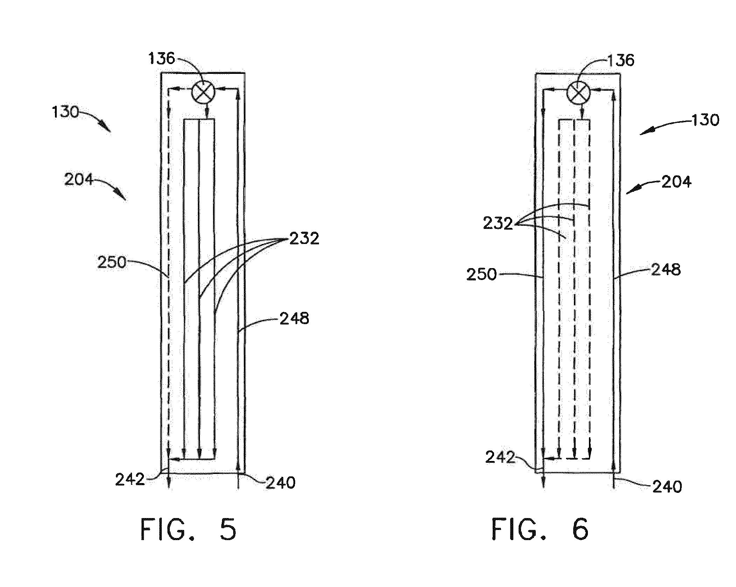

In the exemplary embodiment, heat exchanger assembly 130 is an air cooled heat exchanger that is positioned within shroud 42. Heat exchanger assembly 130 may be utilized in a wide variety of applications on or off the engine. More specifically, heat exchanger 130 operates in a first mode of operation (shown in Figure 5) when the lubricating fluid requires cooling and a second mode of operation (shown in Figure 6) when the lubricating fluid does not require cooling.

Although heat exchanger assembly 130 is described herein to cool oil for engine bearings, it may alternatively or simultaneously cool other fluids. For example, it may cool a fluid used to extract heat from generators or actuators used on the engine. It may also be used to cool fluids which extract heat from electronic apparatus such as engine controls. In addition to cooling a wide variety of fluids utilized by a gas turbine engine assembly, it should be realized that heat exchanger assembly 130, and the methods described herein illustrate that heat exchanger assembly 130 may also cool an apparatus that is mounted on the airframe, and not part of the engine. In other applications, heat exchanger assembly 130 may be mounted remotely from the gas turbine engine, for example on an external surface of the aircraft. Moreover, when cooling of a fluid is not required, heat exchanger assembly 130 may be utilized to de-congeal lubricating fluid remaining in heat exchanger assembly 130 after bypass valve 136 is engaged. Therefore, heat exchanger assembly 130 remains at a temperature warm enough such that fluid does not congeal when bypass valve 136 is reengaged to direct the flow of fluid therethrough.

In the exemplary embodiment, shown in Figure 1, heat exchanger assembly 130 is coupled to inner wall 201 of fan shroud 42 upstream from fan assembly 12, such that air channeled into intake side 28 is first channeled through heat exchanger assembly 130 prior to being supplied to fan assembly 12 to facilitate reducing the operating temperature of the fluid channeled through heat exchanger assembly 130. Alternatively, heat exchanger assembly 130 may be coupled to inner wall 201, between an outlet guide vane 25 and a fan strut 150. Generally, heat exchanger assembly 130 may be positioned anywhere along the axial length of the bypass duct 40 either on the inside of the fan casing 42 or the outside of the splitter 44. In the exemplary embodiment, efficiency is increased when heat exchanger assembly 130 is positioned adjacent engine intake side 28, where a diameter of fan assembly 12 is largest.

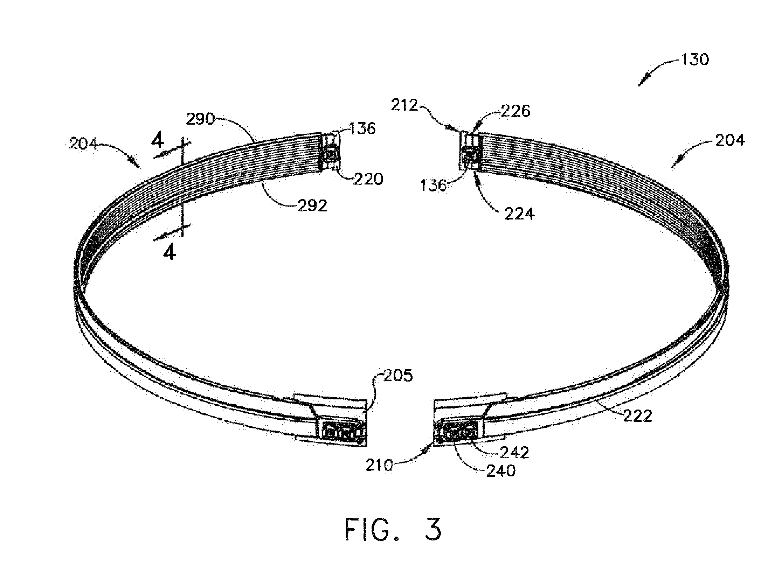

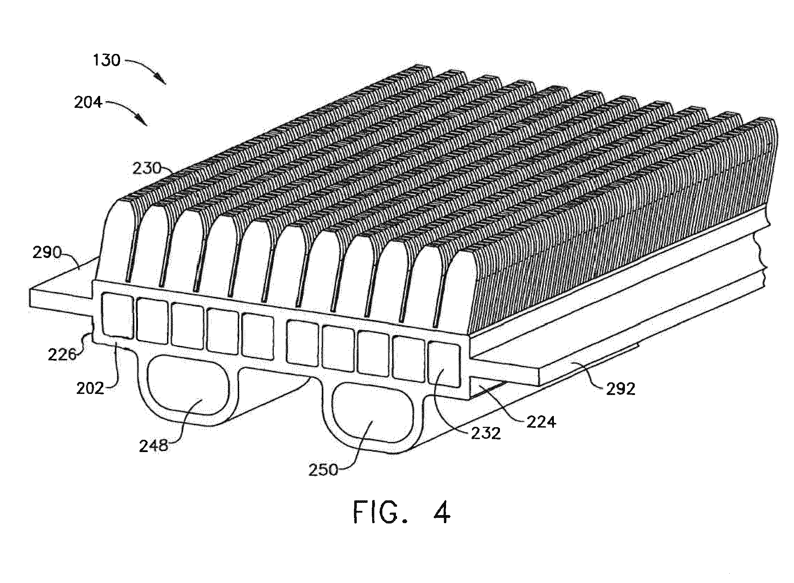

Figure 3 is a perspective view of heat exchanger assembly 130 and Figure 4 is a perspective cross-sectional view of heat exchanger assembly 130 taken through line 4 - 4 shown in Figure 3. In the exemplary embodiment, during assembly, heat exchanger assembly 130 is formed such that heat exchanger assembly 130 has a circumferential and axial profile that is substantially similar to the circumferential and axial profile of at least a portion of shroud 42. More specifically, as shown in Figure 1, heat exchanger assembly 130 is formed such that is has a circumferential and axial profile that is conforming to the circumferential and axial profile of the inner surface 201 of fan shroud 42 at the location where it is mounted. As such, heat exchanger assembly 130 has a substantially arcuate shape such heat exchanger assembly 130 may be placed proximate to an inner surface 201 of fan shroud 42 in alternate locations within engine 10. Moreover, heat exchanger assembly 130 may also be formed such that it has a circumferential and axial profile that is substantially similar to the circumferential and axial profile of outer surface 203 of splitter 44.

As shown in figure 3, heat exchanger assembly 130 is formed by a plurality of segments 204 mounted end-to-end covering substantially all (about 320°) of a circumference of one of casing 42 or splitter 44. Alternatively, heat exchanger assembly 130 may be formed by a single segment 204, which covers the same circumferential length.

Referring again to figures 3 and 4, each segment 204 of heat exchanger assembly 130 includes a body portion 202 having a first end 210 and an opposite second end 212. Body portion 202 also includes a radially inner surface 220, a radially outer surface 222, an upstream wall 226, and an opposite downstream wall 224. Body portion 202 may also includes a plurality of cooling fins 230 extending radially inward from radially inner surface 220. Optionally, if heat exchanger assembly 130 is placed proximate to an outer surface of fan shroud 42, cooling fins 230 may extend either radially inward as shown in Figures 3 and 4, or may extend radially outward, or may include fins that extend both radially inward and radially outward from body portion 202. Moreover, if heat exchanger assembly 130 is placed proximate to outer surface 203 of splitter 44, the cooling fins 130 may extend either radially inward as shown in Figures 3 and 4, or may extend radially outward, or may include fins that extend both radially inward and radially outward from body portion 202.

Body portion 202 also includes a plurality of cooling channels 232 extending lengthwise through each arcuate heat exchanger assembly segment 204. Cooling channels 232 are selectively sized to receive fluid to be cooled therethrough. In the exemplary embodiment, body portion 202 includes ten cooling channels 232 extending therethrough. Optionally, body portion 202 may include a quantity greater than or less than ten channels 232 based on the cooling reduction desired. In the exemplary embodiment, channels 232 have a substantially rectangular cross-sectional profile. Alternatively, cooling channels 232 have a cross-sectional profile that is not rectangular such as for example, circular. Furthermore, these openings are parallel channels that may all carry the same fluid, or they may be segregated into multiple groups where each group carries a different cooling fluid used for different cooling purposes. For example, one group may carry lubrication fluid for the bearings, and another group might carry a separate cooling fluid for electronic apparatus on the engine.

In the exemplary embodiment, extrusion 202 also includes a de-congealing inlet channel 248 and a de-congealing outlet channel 250. Channels 248 and 250 extend lengthwise through each arcuate segment 204 of heat exchanger assembly 130 and are selectively sized to receive fluid therethrough. In an alternative embodiment, body portion 202 may include more than one de-congealing inlet channel 248 and more than one de-congealing outlet channel 250. In the exemplary embodiment, channels 248 and 250 have a substantially rounded rectangular cross-sectional profile. Alternatively, channels 248 and 250 may have a cross-sectional profile that is not rectangular such as for example, circular. Furthermore, channels 248 and 250 are parallel channels that may all carry the same fluid, or they may be segregated into multiple groups where each group carries a different cooling fluid used for different cooling purposes. For example, one group may carry lubrication fluid for the bearings, and another group might carry a separate cooling fluid for electronic apparatus on the engine. In the exemplary embodiment, heat exchanger assembly 130 is formed such that cooling channels 232 are positioned radially outward from de-congealing channels 248 and 250 and radially inward from cooling fins 230. Alternatively, cooling channels 232 may be positioned radially inward from de-congealing channels 248 and 250 and radially outward of cooling fins 230. In another embodiment, cooling channels 232 may be positioned between de-congealing inlet channel 248 and de-congealing outlet channel 250. Generally, cooling channels 232 may be positioned at any location within body portion 202 that facilitates operation of heat exchanger assembly 130 as described herein.

In the exemplary embodiment, cooling fins 230 extend along a width of extrusion 202 between upstream wall 226 and downstream wall 224 and are spaced around heat exchanger assembly 130. As installed in turbine engine 10, fins 230 extend axially along centerline axis 11 in parallel with the airflow direction and are arranged radially around an inside or outside surface of gas turbine engine 10. In the exemplary embodiment, cooling fins 230 are coupled to body portion 202 such that each of the cooling fins 230 is substantially perpendicular to openings 232 and such that the direction of the fluid channeled through openings 232 is approximately perpendicular to the direction of airflow channeled through cooling fins 230. More specifically, cooling fins 230 are aligned substantially parallel with centerline axis 11 such that the airflow channeled into or around fan intake 28 is first channeled between adjacent cooling fins 230.

In one embodiment, body portion 202 is formed utilizing an extrusion process such that cooling fins 230 are integrally formed with body portion 202. A fin cutting process, for example, is then conducted to form the cooling fins 230. Optionally, cooling fins 230 may be coupled to body portion 202 utilizing a welding or brazing procedure, for example. In the exemplary embodiment, body portion 202 and cooling fins 230 are fabricated from a metallic material, such as aluminum.

To facilitate channeling a fluid through body portion 202, heat exchanger assembly 130 also includes at least one inlet connection 240, and at least one outlet connection 242. In the exemplary embodiment, connections 240 and 242 are each coupled to either first end 210 or second end 212 of segment 204 via a manifold 205 and bypass valve 136 is coupled to segment 204 at opposing end 210 or 212. Alternatively, bypass valve 136 may be coupled to the same end, either end 210 or 212, as connections 240 and 242. Bypass valve 136 may not be coupled to segment 204 at all, but separated from while remaining in flow communication with segment 204. In the exemplary embodiment, at least one inlet connection 240 may be coupled to port 132 (shown in Figure 2) and at least one outlet connection 242 may be coupled to port 134 (shown in Figure 2) such that ports 132 and 134 may be operated to channel lubrication fluid from system 100 through heat exchanger assembly 130 during desired operating conditions. Bypass valve 136 is configured to channel lubrication fluids through cooling channels 232 during a first mode of operation, or through de-congealing outlet channel 250 during a second mode of operation, described in further detail below.

Alternatively, heat exchanger assembly 130 can be configured to have a plurality of fluid circuits, each with an inlet connection and an outlet connection. These circuits can each have a separate and distinct purpose and carry non-mixing fluids, which are used for cooling different apparatus.

To facilitate securing heat exchanger assembly 130 to gas turbine engine assembly 10, body portion 202 includes a first tab 290 that is coupled to upstream wall 226 and a second tab 292 that is coupled to downstream wall 224. In the exemplary embodiment, tabs 290 and 292 are each fabricated from the same metallic material as body portion 202 and formed unitarily with body portion 202 utilizing an extrusion process. Alternatively, tabs 290 and 292 are formed as separate components that are attached to body portion 202 utilizing a welding or brazing procedure.

In the exemplary embodiment, heat exchanger assembly 130 is positioned within gas turbine engine assembly 10 such that the inner wall 201 of fan shroud 42 includes recesses (not shown) to receive heat exchanger assembly 130. Heat exchanger assembly 130 is coupled to shroud 42 such that the inner surface of inner wall 201 is flush with radially inner surface 220 of extrusion 202 at the base of fins 230 to facilitate reducing or eliminating pressure losses caused by heat exchanger assembly 130. More specifically, heat exchanger assembly 130 is coupled within gas turbine engine assembly 10 such that only the cooling fins 230 extend into fan duct 40. As such, the inner wall 201 of fan shroud 42 is utilized to substantially cover body portion 202 such that cooling airflow is channeled only through cooling fins 230.

Heat exchanger assembly 130 is formed to include a profile that substantially conforms to a shape of circumferential fan casing inner surface 201 or splitter outer surface 203. Heat exchanger assembly 130 is then coupled to gas turbine engine assembly 10 such that the inner surface of inner wall 201 is flush with radially inner surface 220 of extrusion 202 at the base of the fins 230 as discussed above.

Figure 5 is a schematic illustration of a first mode of operation, shown by solid lines, through heat exchanger assembly 130 shown in Figure 3. The first mode of operation is the standard operating mode of heat exchanger assembly 130 where hot lubrication fluid absorbs heat from various engine components and requires cooling through heat exchanger assembly 130. During the first mode of operation, hot lubrication fluid is channeled from the gas turbine engine 10 into each segment 204 of heat exchanger assembly 130 through inlet connection 240. The hot fluid then flows the length of segment 204 through de-congealing inlet channel 248 and is directed by bypass valve 136 to flow back through segment 204 via cooling channels 232 and out of heat exchanger assembly 130 through outlet connection 242. During the first mode of operation, the hot lubrication fluid is cooled as it flows through cooling channels 232 by the airflow through fins 230 in duct 40 such that the fluid is discharged at a substantially cooler temperature to fluid supply source 120 (shown in Figure 2). Specifically, the lubrication fluid is channeled in a substantially circumferential orientation within or around gas turbine engine 10. Simultaneously, cooling airflow supplied into or around fan intake 28 is channeled through cooling fins 230 to facilitate reducing an operational temperature of the lubrication fluid channeled through heat exchanger assembly 130.

For example, during the first mode of operation the hot lubrication fluid is channeled through openings 232 wherein the hot fluid transfers its heat to a conductive surface, i.e. extrusion 202 of heat exchanger assembly 130 and thus cooling fins 230. The relatively cooler air supplied via inlet 28 is channeled across and/or through cooling fins 230 wherein the heat is transferred from cooling fins 230 to the airflow channeled through duct 40.

Figure 6 is a schematic illustration of a second mode of operation (shown by solid lines) through heat exchanger assembly 130. The second mode of operation is a de-congealing mode that is utilized when engine 10 is subjected to low enough temperatures such that the lubrication fluid reaches a predetermined temperature at which it is too viscous to flow easily through cooling channels 232. When the lubrication fluid reaches the pre-determined temperature, it is not hot enough to require cooling through cooling channels 232, as in the first mode of operation (shown by dotted lines in Figure 6), and the fluid remaining in cooling channels 232 may begin to congeal. In the exemplary embodiment, the pre-determined congealing temperature is approximately 100 degrees Fahrenheit. Alternatively, the pre-determined congealing temperature may be any temperature to facilitate operation of heat exchanger assembly as described herein.

Heat exchanger assembly 130 must be kept warm enough to facilitate de-congealing of residual fluid present in each segment 204 of heat exchanger assembly 130 when the fluid is not hot enough to require cooling. During the second mode of operation, the lubrication fluid does require cooling, but still retains some heat from its use in engine 10. During the second mode of operation, lubrication fluid is channeled from the gas turbine engine 10 into each segment 204 of heat exchanger assembly 130 through inlet connection 240. The fluid then flows the length of segment 204 through de-congealing inlet channel 248, where bypass valve 136 directs the flow to bypass cooling channels 232 and flow back through segment 204 via de-congealing outlet channel 250 instead of through cooling channels 232, as in the first mode of operation. The fluid is then discharged from heat exchanger assembly 130 through outlet connection 242 to reservoir 120. Alternatively, in order to allow the fluid to flow through the largest cross-sectional area possible and reduce the pressure drop in heat exchanger assembly 130, the second mode of operation may include directing the flow of lubricating fluid back through segment 204 via de-congealing channel 250 and cooling channels 232.

During the second mode of operation, de-congealing mode, the fluid flowing the entire length of each segment 204 of heat exchanger assembly 130 through de-congealing channels 248 and 250 transfers heat to extrusion 202 of each segment 204 such that heat exchanger assembly 130 is heated by conduction to retain heat exchanger assembly 130 at a sufficient temperature to facilitate de-congealing of fluid within heat exchanger assembly 130. The heating of extrusion 202 allows any fluid in cooling channels 232 to de-congeal such that the fluid flows easily through channels 232. When the fluid in a single channel 232 de-congeals, the heat conducted is sufficient enough such that remaining channels 232 de-congeal quickly thereafter. Moreover, the close proximity of channels 248 and 250 containing warm lubricating fluid to channels 232 provide further heat by conduction, thus decreasing the amount of time required to heat segment 204 to facilitate de-congealing. Therefore, it is beneficial to locate channels 248 and 250 near channels 232 such that only one wall of extrusion 202 separates each channel 232 from at least one of channels 248 and 250.

If heat exchanger assembly 130 was not heated by channels 248 and 250 during the second mode of operation, then the flow of fluid through cooling channels 232 during the first mode of operation may be obstructed by congealed fluid present in the cold heat exchanger assembly. Furthermore, the time required to warm the heat exchanger assembly to facilitate de-congealing of the fluid is longer because of the lower initial temperature than the temperature of heat exchanger assembly 130 having constant flow of warming fluid during the second mode of operation.

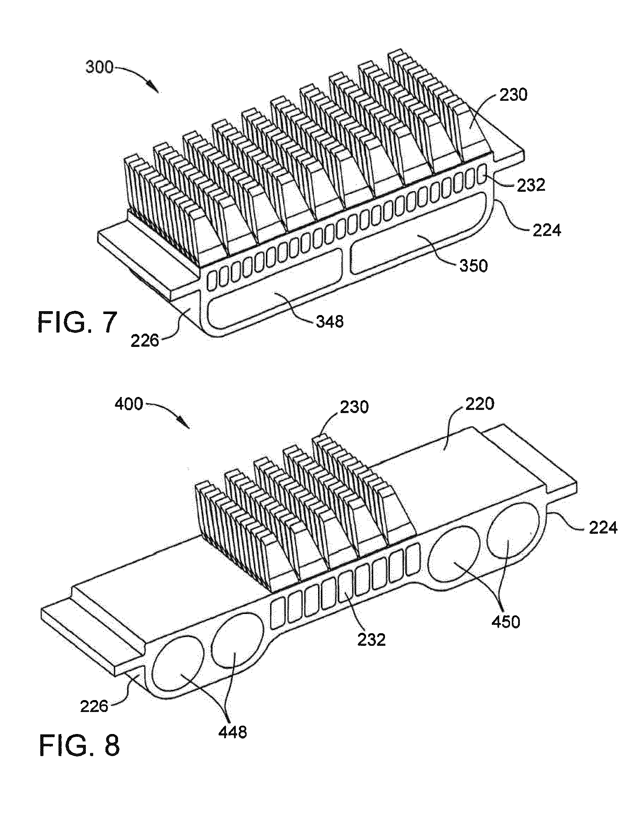

Figure 7 is a perspective cross-sectional view of another embodiment of a heat exchanger assembly 300 that may be utilized with gas turbine engine 10 (shown in Figure 1). Heat exchanger assembly 300 is substantially similar to heat exchanger assembly 130 (shown in Figures 3 and 4) in composition and operation except that heat exchanger assembly 300 includes an elongated de-congealing inlet channel 348 and an elongated de-congealing outlet channel 350 that each extend approximately halfway between downstream wall 224 and upstream wall 226. As such, similar components shown in Figure 7 are labeled with the same reference numbers used in Figure 4.

Figure 8 is a perspective cross-sectional view of yet another embodiment of a heat exchanger assembly 400 that may be utilized with the gas turbine engine 10 (shown in Figure 1). Heat exchanger assembly 400 is substantially similar to heat exchanger assembly 130 (shown in Figures 3 and 4) in composition and operation except that heat exchanger assembly 400 includes a de-congealing inlet channel 448 comprising two channels having circular cross sections and a de-congealing outlet channel 450 also comprising two channels having circular cross sections. As such, similar components shown in Figure 8 are labeled with the same reference numbers used in Figure 4. In the embodiment shown in Figure 8, de-congealing channels 448 and 450 are positioned on either side of cooling channels 232. Heat exchanger assembly 400 includes fins 230 that extend outward from surface 220 only above cooling channels 232. Alternatively, heat exchanger assembly 400 may include fins 230 that extend from surface 220 a full distance between downstream wall 224 and upstream wall 226.

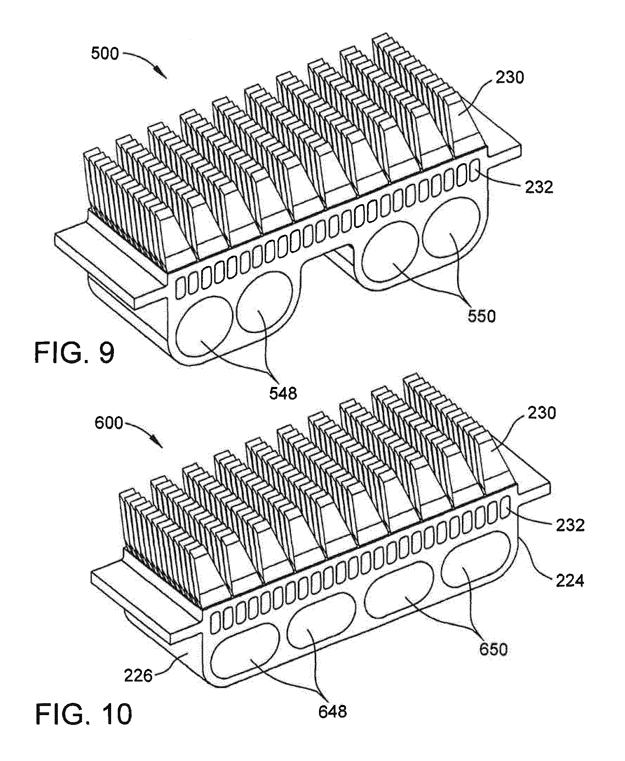

Figure 9 is a perspective cross-sectional view of a further embodiment of a heat exchanger assembly 500 that may be utilized with the gas turbine engine 10 (shown in Figure 1). Heat exchanger assembly 500 is substantially similar to heat exchanger assembly 130 (shown in Figures 3 and 4) in composition and operation except that heat exchanger assembly 500 includes a de-congealing inlet channel 548 comprising two channels having circular cross sections and a de-congealing outlet channel 550 also comprising two channels having circular cross sections. As such, similar components shown in Figure 9 are labeled with the same reference numbers used in Figure 4.

Figure 10 is a perspective cross-sectional view of yet another embodiment of a heat exchanger assembly 600 that may be utilized with the gas turbine engine 10 (shown in Figure 1). Heat exchanger assembly 600 is substantially similar to heat exchanger assembly 130 (shown in Figures 3 and 4) in composition and operation except that heat exchanger assembly 600 includes a de-congealing inlet channel 648 comprising two channels having rounded rectangular cross sections and a de-congealing outlet channel 650 also comprising two channels having rounded rectangular cross sections. As such, similar components shown in Figure 10 are labeled with the same reference numbers used in Figure 4. The two individual channels comprising de-congealing inlet channel 648 extend approximately halfway between downstream wall 224 and upstream wall 226. Similarly, the two individual channels comprising de-congealing outlet channel 650 also extend approximately halfway between downstream wall 224 and upstream wall 226. As such, de-congealing channels 648 and 650 together extend an entire length between downstream wall 224 and upstream wall 226.

The above-described heat exchangers are cost-effective and highly reliable in reducing the temperature of any fluid channeled therethrough during a first mode of operation and retaining the heat exchanger at a sufficient temperature to facilitate de-congealing during a second mode of operation. More specifically, each heat exchanger assembly includes an extrusion having a plurality of cooling channels, at least one de-congealing inlet channel, and at least one de-congealing outlet channel extending therethrough. The heat exchanger also includes a plurality of cooling fins that are coupled to the radially inner surface of the heat exchanger and may also be coupled to the radially outer surface of the heat exchanger. In the exemplary embodiment, the heat exchanger may be fabricated utilizing an extruded aluminum material that intersects the airflow path and has a relatively small cross-sectional profile to facilitate a minimizing pressure loss within the bypass duct that may be attributed to the heat exchanger assembly.

Exemplary embodiments of heat exchanger assemblies are described above in detail. The heat exchanger assemblies are not limited to the specific embodiments described herein, but rather, components of each system may be utilized independently and separately from other components described herein. For example, each heat exchanger assembly may be utilized in a wide variety of gas turbine engines and positioned within a wide variety of locations within the gas turbine engine. Moreover, the heat exchanger assemblies described herein may also be coupled to the radially outer wall of the splitter within the bypass duct, or to an external surface of the fan shroud if desired. Where practical, they can be mounted anywhere there is an airflow which can provide cooling.

Although specific features of various embodiments of the invention may be shown in some drawings and not in others, this is for convenience only. In accordance with the principles of the invention, any feature of a drawing may be referenced and/or claimed in co bination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.
Various aspects and embodiments of the invention are indicated in the following clauses:
1. A heat exchanger assembly for use in a gas turbine engine including a core gas turbine engine having an axis of rotation, a splitter circumscribing the core gas turbine engine, a fan assembly positioned upstream of the core gas turbine engine, a fan casing substantially circumscribing the fan assembly, and a bypass duct that is defined between the fan casing and the splitter, said heat exchanger assembly comprising:
   a bypass valve; and
   at least one body portion including:
      at least one de-congealing inlet channel in flow communication with said bypass valve;
      a plurality of cooling channels in flow communication with said bypass valve and said at least one de-congealing inlet channel, wherein said bypass valve is configured to deliver a fluid between said at least one de-congealing inlet channel and said plurality of cooling channels during a first mode of operation to facilitate reducing a temperature of the fluid; and
      at least one de-congealing outlet channel in flow communication with said bypass valve and said at least one de-congealing inlet channel, wherein said bypass valve is configured to deliver the fluid between said at least one de-congealing inlet channel and said at least one de-congealing outlet channel during a second mode of operation.
2. The heat exchanger assembly in accordance with clause 1, wherein said heat exchanger assembly is coupled to a radially interior surface of the fan casing such that said heat exchanger assembly is positioned upstream of the fan assembly.
3. The heat exchanger assembly in accordance with either of clause 1 or 2, wherein said heat exchanger assembly is coupled to a radially exterior surface of the splitter such that the heat exchanger assembly is positioned within the bypass duct.
4. The heat exchanger assembly in accordance with any preceding clause, further comprising a plurality of cooling fins extending radially from at least one exterior surface of said body portion, said plurality of cooling channels configured to receive a flow of air to facilitate reducing a temperature of the fluid flowing through said plurality of cooling channels during the first mode of operation.
5. The heat exchanger assembly in accordance with any preceding clause, wherein said plurality of cooling channels are positioned radially outward of said at least one de-congealing inlet channel and said at least one de-congealing outlet channel and said plurality of cooling channels are positioned radially inward of said plurality of cooling fins.
6. The heat exchanger assembly in accordance with any preceding clause, wherein said plurality of cooling fins are formed integrally with said body portion.
7. The heat exchanger assembly in accordance with any preceding clause, further comprising:
   an inlet in flow communication with said at least one de-congealing inlet channel at a first end of said heat exchanger assembly; and
   an outlet in flow communication with said at least one de-congealing outlet channel at said first end of said heat exchanger assembly, wherein said bypass valve is positioned at an opposing second end of said heat exchanger assembly.
8. The heat exchanger assembly in accordance with any preceding clause, wherein said bypass valve is configured to deliver the fluid to said at least one de-congealing outlet channel when the fluid reaches a pre-determined temperature.
9. The heat exchanger assembly in accordance with any preceding clause, wherein said bypass valve is configured to deliver the fluid to said at least one de-congealing outlet channel and said plurality of cooling channels during the second mode of operation.
10. The heat exchanger assembly in accordance with any preceding clause, wherein said at least one de-congealing outlet channel is proximate to said plurality of cooling channels such that fluid flow through said at least one de-congealing outlet channel during the second mode of operation facilitates de-congealing an amount of fluid within said plurality of cooling channels.
11. A method for assembling a gas turbine engine including an axis of rotation, the method comprising:
   providing a fan casing that substantially circumscribes the gas turbine engine;
   providing a heat exchanger assembly including:
      a bypass valve; and
      at least one body portion including:
         at least one de-congealing inlet channel in flow communication with said bypass valve;
         a plurality of cooling channels in flow communication with said bypass valve and said at least one de-congealing inlet channel, wherein said bypass valve is configured to deliver a fluid between said at least one de-congealing inlet channel and said plurality of cooling channels during a first mode of operation to facilitate reducing a temperature of the fluid; and
         at least one de-congealing outlet channel in flow communication with said bypass valve and said at least one de-congealing inlet channel, wherein said bypass valve is configured to deliver the fluid between said at least one de-congealing inlet channel and said at least one de-congealing outlet channel during a second mode of operation; and
   coupling the heat exchanger assembly to the fan casing.
12. The method according to any clause 11, further comprising coupling a plurality of cooling fins to a radially exterior surface of the body portion such that the plurality of cooling fins are configured to receive a flow of air to facilitate reducing a temperature of the fluid flowing through the plurality of cooling channels during the first mode of operation
13. The method according to either of clause 11 or 12, wherein coupling the heat exchanger assembly to the fan casing further comprises coupling the heat exchanger assembly within a recess in the fan casing such that the at least one radially exterior surface is flush with a radially interior surface of the fan casing such that only the plurality of cooling fins are exposed to the flow of air.
14. The method according to any of clauses 11 to 13, further comprising:
   positioning the plurality of cooling channels radially outward of the at least one de-congealing inlet channel and the at least one de-congealing outlet channel; and
   positioning the plurality of cooling channels radially inward of the plurality of cooling fins.
15. A gas turbine engine assembly comprising:
   a core gas turbine engine having an axis of rotation;
   a fan casing substantially circumscribing said core gas turbine engine; and
   a heat exchanger assembly positioned within said fan casing, said heat exchanger assembly comprising:
      a bypass valve; and
      at least one body portion including:
         at least one de-congealing inlet channel in flow communication with said bypass valve;
         a plurality of cooling channels in flow communication with said bypass valve and said at least one de-congealing inlet channel, wherein said bypass valve is configured to deliver a fluid between said at least one de-congealing inlet channel and said plurality of cooling channels during a first mode of operation to facilitate reducing a temperature of the fluid; and
         at least one de-congealing outlet channel in flow communication with said bypass valve and said at least one de-congealing inlet channel, wherein said bypass valve is configured to deliver the fluid between said at least one de-congealing inlet channel and said at least one de-congealing outlet channel during a second mode of operation.
16. The gas turbine engine assembly in accordance with clause 15, further comprising a plurality of cooling fins extending radially from at least one radially exterior surface of said body portion and configured to receive a flow of air to facilitate reducing a temperature of the fluid flowing through said plurality of cooling channels during the first mode of operation.
17. The gas turbine engine assembly in accordance with either of clause 15 or 16, wherein said heat exchanger assembly is coupled within a recess in said fan casing such that said at least one radially exterior surface is flush with a radially interior surface of said fan casing such that only said plurality of cooling fins are exposed to the flow of air.
18. The gas turbine engine assembly in accordance with any of clauses 15 to 17, wherein said plurality of cooling channels are positioned radially outward of said at least one de-congealing inlet channel and said at least one de-congealing outlet channel and are positioned radially inward of said plurality of cooling fins.
19. The gas turbine engine assembly in accordance with any of clauses 15 to 18, wherein said bypass valve is configured to deliver the fluid to said at least one de-congealing outlet channel when the fluid reaches a pre-determined temperature.
20. The gas turbine engine assembly in accordance with any of clauses 15 to 19, wherein said at least one de-congealing outlet channel is proximate to said plurality of cooling channels such that fluid flow through said at least one de-congealing outlet channel during the second mode of operation facilitates de-congealing an amount of fluid within said plurality of cooling channels.

## Claims

1. A heat exchanger assembly for use in a gas turbine engine including a core gas turbine engine having an axis of rotation, a splitter circumscribing the core gas turbine engine, a fan assembly positioned upstream of the core gas turbine engine, a fan casing substantially circumscribing the fan assembly, and a bypass duct that is defined between the fan casing and the splitter, said heat exchanger assembly comprising:
a bypass valve; and
at least one body portion including:
at least one de-congealing inlet channel in flow communication with said bypass valve;
a plurality of cooling channels in flow communication with said bypass valve and said at least one de-congealing inlet channel, wherein said bypass valve is configured to deliver a fluid between said at least one de-congealing inlet channel and said plurality of cooling channels during a first mode of operation to facilitate reducing a temperature of the fluid; and
at least one de-congealing outlet channel in flow communication with said bypass valve and said at least one de-congealing inlet channel, wherein said bypass valve is configured to deliver the fluid between said at least one de-congealing inlet channel and said at least one de-congealing outlet channel during a second mode of operation.

2. The heat exchanger assembly in accordance with Claim 1, wherein said heat exchanger assembly is coupled to a radially interior surface of the fan casing such that said heat exchanger assembly is positioned upstream of the fan assembly.

3. The heat exchanger assembly in accordance with Claim 1, wherein said heat exchanger assembly is coupled to a radially exterior surface of the splitter such that the heat exchanger assembly is positioned within the bypass duct.

4. The heat exchanger assembly in accordance with any preceding Claim, further comprising a plurality of cooling fins extending radially from at least one exterior surface of said body portion, said plurality of cooling channels configured to receive a flow of air to facilitate reducing a temperature of the fluid flowing through said plurality of cooling channels during the first mode of operation.

5. The heat exchanger assembly in accordance with Claim 4, wherein said plurality of cooling channels are positioned radially outward of said at least one de-congealing inlet channel and said at least one de-congealing outlet channel and said plurality of cooling channels are positioned radially inward of said plurality of cooling fins.

6. The heat exchanger assembly in accordance with either of Claim 4 or 5, wherein said plurality of cooling fins are formed integrally with said body portion.

7. The heat exchanger assembly in accordance with any preceding Claim, further comprising:
an inlet in flow communication with said at least one de-congealing inlet channel at a first end of said heat exchanger assembly; and
an outlet in flow communication with said at least one de-congealing outlet channel at said first end of said heat exchanger assembly, wherein said bypass valve is positioned at an opposing second end of said heat exchanger assembly.

8. The heat exchanger assembly in accordance with any preceding Claim, wherein said bypass valve is configured to deliver the fluid to said at least one de-congealing outlet channel when the fluid reaches a pre-determined temperature.

9. The heat exchanger assembly in accordance with any preceding Claim, wherein said bypass valve is configured to deliver the fluid to said at least one de-congealing outlet channel and said plurality of cooling channels during the second mode of operation.

10. The heat exchanger assembly in accordance with any preceding Claim, wherein said at least one de-congealing outlet channel is proximate to said plurality of cooling channels such that fluid flow through said at least one de-congealing outlet channel during the second mode of operation facilitates de-congealing an amount of fluid within said plurality of cooling channels.

11. A method for assembling a gas turbine engine including an axis of rotation, the method comprising:
providing a fan casing that substantially circumscribes the gas turbine engine;
providing a heat exchanger assembly including:
a bypass valve; and
at least one body portion including:
at least one de-congealing inlet channel in flow communication with said bypass valve;
a plurality of cooling channels in flow communication with said bypass valve and said at least one de-congealing inlet channel, wherein said bypass valve is configured to deliver a fluid between said at least one de-congealing inlet channel and said plurality of cooling channels during a first mode of operation to facilitate reducing a temperature of the fluid; and
at least one de-congealing outlet channel in flow communication with said bypass valve and said at least one de-congealing inlet channel, wherein said bypass valve is configured to deliver the fluid between said at least one de-congealing inlet channel and said at least one de-congealing outlet channel during a second mode of operation; and
coupling the heat exchanger assembly to the fan casing.

12. The method according to Claim 11, further comprising coupling a plurality of cooling fins to a radially exterior surface of the body portion such that the plurality of cooling fins are configured to receive a flow of air to facilitate reducing a temperature of the fluid flowing through the plurality of cooling channels during the first mode of operation

13. The method according to Claim 12, wherein coupling the heat exchanger assembly to the fan casing further comprises coupling the heat exchanger assembly within a recess in the fan casing such that the at least one radially exterior surface is flush with a radially interior surface of the fan casing such that only the plurality of cooling fins are exposed to the flow of air.

14. The method according to any of Claims 11 to 13, further comprising:
positioning the plurality of cooling channels radially outward of the at least one de-congealing inlet channel and the at least one de-congealing outlet channel; and
positioning the plurality of cooling channels radially inward of the plurality of cooling fins.

15. A gas turbine engine assembly comprising:
a core gas turbine engine having an axis of rotation;
a fan casing substantially circumscribing said core gas turbine engine; and
a heat exchanger assembly positioned within said fan casing, said heat exchanger assembly being according to any of Claims 1 to 10.
